(19)

**Europäisches Patentamt**
**European Patent Office**
**Office européen des brevets**

(11)  **EP 1 478 947 B1**

(12)  **EUROPÄISCHE PATENTSCHRIFT**

(45) Veröffentlichungstag und Bekanntmachung des Hinweises auf die Patenterteilung:
**26.03.2008 Patentblatt 2008/13**

(21) Anmeldenummer: **03704221.5**

(22) Anmeldetag: **17.01.2003**

(51) Int Cl.:
***G01V 3/08*** *(2006.01)*

(86) Internationale Anmeldenummer:
**PCT/DE2003/000119**

(87) Internationale Veröffentlichungsnummer:
**WO 2003/073130 (04.09.2003 Gazette 2003/36)**

(54)  **VERFAHREN UND MESSGERÄT ZUR ORTUNG EINGESCHLOSSENER OBJEKTE**

METHOD AND MEASURING APPLIANCE FOR ENCLOSED OBJECTS

PROCEDE ET APPAREIL DE MESURE POUR REPERER DES OBJETS RENFERMES DANS UN MILIEU

(84) Benannte Vertragsstaaten:
**DE FR GB IT**

(30) Priorität: **21.02.2002 DE 10207424**

(43) Veröffentlichungstag der Anmeldung:
**24.11.2004 Patentblatt 2004/48**

(73) Patentinhaber: **ROBERT BOSCH GMBH**
**70442 Stuttgart (DE)**

(72) Erfinder:
• **CLAUSS, Stefan**
**70771 Leinfelden-Echterdingen (DE)**
• **SKULTETY-BETZ, Uwe**
**70771 Leinfelden-Echterdingen (DE)**
• **HAASE, Bjoern**
**70182 Stuttgart (DE)**
• **HOFFMANN, Ulli**
**75223 Nieffern-Oeschelbronn (DE)**

(56) Entgegenhaltungen:
**WO-A-01/04648          US-B1- 6 198 271**
**US-B1- 6 211 662**

## Beschreibung

Stand der Technik

Die Erfindung betrifft ein Verfahren bzw. ein Meßgerät zur Ortung von in einem Medium eingeschlossenen Objekten nach dem Oberbegriff des Anspruchs 1 bzw. des Anspruchs 18.

Ein solches Verfahren bzw. ein Meßgerät zur Durchführung dieses Verfahrens nutzt eine kapazitive Sensorvorrichtung, die ein Detektionssignal, beispielsweise in Form eines elektromagnetischen Feldes erzeugt, so dass das Detektionssignal das zu untersuchende Medium durchgreift, zumindest jedoch in ausreichendem Maße in das Medium eingreift. Ein in dem Medium eingeschlossenes Objekt beeinflußt das Detektionssignal, so dass durch eine Auswertung dieses Detektionssignals Informationen über ein in dem Medium eingeschlossenes Objekt gewonnen werden können.

Ein gattungsgemäßes Meßgerät, beispielsweise ein Studsensor detektiert ein in einem Medium eingeschlossenes Objekt durch die Änderung der elektrischen Kapazität seiner kapazitiven Sensorvorrichtung, welche das eingeschlossene Objekt erzeugt. Ein in einem Medium eingeschlossenes Objekt ändert die dielektischen Eigenschaften des Mediums, so dass ein in die Nähe des Objekts gebrachter Meßkondensator eine auf das Objekt zurückgehende Kapazitätsänderung bzw eine Änderung seiner Impedanz erfährt. Diese Kapazitätsänderung läßt sich beispielsweise durch den Verschiebestrom des Meßkondensators der kapazitiven Sensorvorrichtung messen.

Aus der US 6,249,113 B1 ist ein kompakter, handgehaltener Studsensor bekannt, der zur Ortung eingeschlossener Objekte die Kapazitätsänderungen in einem Sensorschaltkreis detektiert, wenn das Meßgerät über eine Wand verfahren wird. Zur Anzeige des genauen Ortes an dem ein eingeschlossenes Objekt in dem Medium geortet wurde, besitzt das Meßgerät der US 6,249,113 B1 ein Array Von LEDs, welches pfeilförmig auf der Gehäuseoberfläche des Meßgerätes angeordnet ist. Wird ein Objekt von dem Meßgerät detektiert, so wird abhängig von der Signalstärke ein LED-Paar der pfeilförmigen LED-Anordnung auf dem Gehäuse des Meßgerätes aktiviert. Je näher man dem eingeschlossenen Objekt kommt, d.h. je stärker das vom Objekt erzeugte Detektionssignal ist, desto weiter wandern die aktivierten LEDs in die Pfeilspitze des LED Arrays. Befindet sich das Meßgerät letztendlich direkt über dem eingeschlossenen Objekt, so ist die Pfeilspitze des LED Arrays erleuchtet, so dass prinzipiell mit dem Meßgerät der US 6,249,113 B1 eine Lokalisierung von in einem Medium, beispielsweise einer Wand, eingeschlossenen Objekten möglich ist. Nicht möglich ist mit dem in der US 6,249,113 B1 offenbarten Vorrichtung zur Ortung in einem Medium eingeschlossener Objekte sowie dem zugrundeliegenden recht einfachen Verfahren eine Messung der Tiefe in der das Objekt eingeschlossen ist.

Die WO 94/04932 offenbart eine tragbare Vorrichtung zur Ortung hinter einer Oberfläche positionierter Gegenstände mit einem Sensor zur Detektion einer durch das Objekt hervorgerufenen zusätzlichen Kapazität, mit einer Auswerteeinheit für das Detektionssignal sowie mit einem Display zur Darstellung der Meßergebnisse. Das Meßgerät der WO 94/04932 besitzt darüber hinaus eine Vorrichtung, die es erlaubt die Sensorvorrichtung in einem hochsensitiven bzw. in einem weniger sensitiven Mode zu betreiben.

Die WO 94/04932 offenbart darüber hinaus ein Verfahren zur Bestimmung des Ortes eines hinter einer Oberfläche positionierten Objektes. Dazu wird das entsprechende Meßgerät über die zu untersuchende Wand verfahren. Der Sensor der WO 94/04932 hat die Möglichkeit einen Anstieg bzw. eine Verringerung der Dichte des Materials zu zensieren. Dies ermöglicht es der Anordnung, den Anwender beispielsweise darüber zu informieren, dass der Sensor falsch, beispielsweise direkt oberhalb eines Einschlusses kalibriert worden ist. Das zugrunde liegende Verfahren ermöglicht weiterhin, den Anwender davon in Kenntnis zu setzen, dass das untersuchte Medium zu dick bzw. zu dünn ist, ein eingeschlossenes Objekt zu detektieren.

Ein digitaler Speicher des Meßgerätes der WO 94/04932 ermöglicht es, das Kalibrierungsdaten so lange zu speichern, wie das Meßgerät eingeschaltet ist.

Aus der US 6,198,271 B1 ist ein Studsensor bekannt, der zur Ortung von in einer Wand eingeschlossenen Objekten die Kapazitätsänderungen von drei, meßgerätintegrierten kapazitiven Sensoren detektiert, während der Sensor über die Wand verfahren wird. Ein Auswertungsschaltkreis überwacht die relativen Zeiten, die zur Aufladung der drei kapazitiven Elemente notwendig sind, so dass während der Sensor über die zu untersuchende Wand verfahren wird, Änderungen in den relativen Kapazitäten der drei Sensorelemente aufgrund einer vom eingeschlossenen Objekt verursachten Änderung der Dielektrizitätskonstanten des untersuchten Materials gemessen werden können. Die Vergleichsschaltung nutzt diese Änderungen in den gemessenen relativen Kapazitäten der einzelnen Sensorelemente, um das eingeschlossene Objekt zu lokalisieren.

Wenn das Gerät der US 6,198,271 B1 eingeschaltet wird, führt ein Mikrocontroller automatisch eine Kalibrierungssequenz durch. Während einer solchen Kalibrierungssequenz hat ein Bediener des Messgerätes dieses in einer derartigen Position zu halten, dass die dielektrischen Konstanten der drei geräteinternen kapazitiven Sensoren über der Kalibrierungsdauer konstant sind. Das Gerät kann dabei beispielsweise entfernt von einer Wand oder Struktur gehalten werden, so dass lediglich die Dielektrizitätskonstante der Luft von den drei kapazitiven Sensoren gemessen wird.

Das Meßgerät der US 6,198,271 B1 weist eine Anzeige bestehend aus einer Mehrzahl von Anzeigeelementen auf, die derart mit der Auswerteeinheit des Meßgerätes verschaltet sind, dass nur diejenigen Elemente ein Signal anzeigen, die direkt oberhalb des georteten Objektes sich befinden. Auf diese Weise ist es möglich, das Meßgerät über dem georteten Objekt zu zentrieren und das Objekt dadurch indirekt zu lokalisieren.

Vorteile der Erfindung

Das erfindungsgemäße Verfahren zur Ortung von in einem Medium eingeschlossenen Objekten weist die Merkmale des Anspruchs 1 auf. Das Verfahren nutzt ein von einer kapazitiven Sensorvorrichtung erzeugtes Detektionssignal, welches in das zu untersuchende Medium eingreift und durch ein im Medium vorhandene Objekt verändert wird. Eine Änderung der dielektrischen Eigenschaften des vermessenden Mediums wird aufgrund des Vorliegens eines eingeschlossenen Objektes mit dem erfindungsgemäßen Verfahren detektiert. Durch die Auswertung des Detektionssignales, d.h. durch die Bestimmung der Kapazitätsänderung, die auf das eingeschlossene Objekt zurückgeht, ist es möglich mit Hilfe einer kapazitiven Sensorvorrichtung Informationen über die genaue Lage des eingeschlossenen Objektes zu extrahieren.

Das technische Problem, welches die Genauigkeit der Auswertung des Meßsignales begrenzt, resultiert daraus, dass die durch dielektrische Einschlüsse (verborgenes Objekt) vermittelten Veränderungen der Kapazität bzw. der zugeordneten Impedanz des Meßsensors extrem klein sind. Daher sind zur Bestimmung der Kapazitätsänderung des Meßsensors hochgenaue Präzisionsmessungen unumgänglich. Die Analog-Elektronik der kapazitiven Sensorvorrichtung liefert bei einer Drift, d.h. einer Variation der Umgebungsparameter, insbesondere einer Variation der Temperatur unter Umständen stark unterschiedliche Meßsignale. Weitere Drifteffekte ergeben sich aufgrund der Variation der Feuchte im Meßgerät, der Alterung von Bauteilen und beispielsweise auch durch eine Variation der Versorgungsspannung des Meßgerätes.

Das erfindungsgemäße Verfahren nutzt eine Kompensation dieser Drifteffekte, bei der die Variation des Meßsignals aufgrund der beschriebenen Drifteffekte, unabhängig von der eigentlichen Ursache der Drift, durch entsprechende Kalibrierungsmessungen kompensiert wird.

Durch die Kalibrierungsmessungen werden im erfindungsgemäßen Verfahren Korrekturfunktionen ermittelt, die es ermöglichen, auftretende Drifteffekte aus dem Messsignal heraus zu rechnen.

Im erfindungsgemäßen Verfahren wird daher zur rechnerischen Kompensation von Drifteffekten ein Vergleich durchgeführt, zwischen mindestens einer Referenzmessung an einer definierten Kalibrierungsgröße und einer, vor der eigentlichen Ortungsmessung vom Anwender durchzuführenden Kalibrierungsmessung der gleichen Kallibrierungsgröße.

Das zur Driftkompensation herangezogene Referenzsignal wird durch Messung an einer definierten Impedanz gewonnen. In vorteilhafter Weise wird diese Messung mit Hilfe einer geräteinternen Kalibrierungsvorrichtung durchgeführt. Dazu sind im Meßgerät in vorteilhafter Weise Schaltmittel vorgesehen, die es ermöglichen das Detektionssignal beispielsweise kurz zuschließen um so eine definierte Impedanz zu erzeugen.

Diese definierte Impedanz läßt sich unter Kalibrierungsbedingungen d.h. unter Normwerten für Temperatur, Luftdruck, Luftfeuchtigkeit usw. vorteilhafterweise bereits werksseitig durchführen und in entsprechende Speichermedien des erfindungsgemäßen Meßgerätes ablegen. Aus der Messung derselben Kalibrierungsgröße unter realen Bedingungen, d.h. am Einsatzort des Meßgerätes kann durch den Vergleich des Kalibrierungssignals mit dem abgespeicherten Referenzsignal eine Korrekturfunktion ermittelt werden, die es ermöglicht die beschriebenen Drifteffekte, unabhängig von ihrer Ursache, aus dem Meßsignal herauszurechnen.

Sowohl das unter Normbedingungen abgespeicherte Referenzsignal als auch das jeweils zur Überprüfung neu zu messende Kalibrierungssignal werden an definierten Impedanzen, beispielsweise dem beschriebenen Kurzschlußkreis der kapazitiven Sensorvorrichtung gemessen. Auch ist es möglich, ein "offenes Ende" der Detektionsleitung im Front-End des Meßgerätes zur Erzeugung einer definierten Impedanz zu verwenden. In naheliegender Weise ist auch eine Luftmessung sowohl zur Ermittlung eines Referenzsignals, als auch zur Ableitung des Kalibriersignals in vorteilhafter Weise möglich.

Besonders vorteilhaft ist es, das Kalibrier- als auch das Referenzsignal an Hand eines Kalibriersteines, der verschiedene definierte Materialien in definierter Anordnung aufweist, zu erzeugen. Das Referenzsignal kann mit Hilfe eines Kalibriersteines noch werksseitig für jedes einzelne Meßgerät aufgenommen werden. Wird ein solcher Kalibrierstein einem ausgelieferten Meßgerät beigelegt, so ist es dem Anwender jederzeit möglich, ein entsprechendes Kalibriersignal vor Ort zu erzeugen.

Das erfindungsgemäße Verfahren führt in vorteilhafter Weise einen Vergleich mindestens eines abgespeicherten Referenzsignals der gewählten Kalibrierungsgröße mit dem vor einer Messung zur Ortung eines eingeschlossenen Objektes gemessenen Kalibriersignal der gleichen Kalibrierungsgröße durch und ermittelt aus diesem Vergleich eine Korrekturfunktion für das auszuwertende Meßsignal.

Im Speziellen benutzt das erfindungsgemäße Verfahren eine lineare Korrekturfunktion, d.h. zwei Korrekturparameter um den Einfluß von Driften im Meßgerät auf die Meßgröße zu kompensieren. Als Meßgröße, die zur Gewinnung der Informationen über den eingeschlossenen Gegenstand dient wird in vorteilhafter Weise eine mit dem Verschiebestrom der kapazitiven Sensorvorrichtung korrigierte Meßgröße genutzt. Das erfindungsgemäße Verfahren setzt in vorteilhafter Weise voraus, dass die genutzte Meßgröße in linearer Weise vom Verschiebestrom der kapazitiven Sensorvorrichtung abhängig ist. Als Meßgröße wird insbesondere eine elektrische Spannung in der Schaltungsanordnung der kapazitiven Sensorvorrichtung ausgewertet. Über die Messung dieser zeitabhängigen Meßgröße M(t) an verschiedenen Referenzmaterialien lassen sich Störsignale, die sich dem ursprünglichen Detektionssignal bzw. dem Verschiebestrom der kapazitiven Sensorvorrichtung überlagern, ermitteln und im Laufe des Verfahrensablaufs aus dem Meßsignal herausrechnen.

Die zur Ortung des eingeschlossenen Gegenstands genutzte Spannungsmessung wird in vorteilhafter Weise sowohl für den Betrag als auch die Phase des Meßsignals durchgeführt und ausgewertet.

In vorteilhafter Weise wird diese Meßgröße M(t)als Funktion einer lateralen Verschiebung der das Detektionssignal generierenden kapazitiven Sensorvorrichtung gemessen und ausgewertet. Auf diese Weise wird eine ortskorrelierte Signalauswertung ermöglicht. Dies bedeutet, dass der Einfluß eines verborgenen Objektes, beispielsweise einer elektrischen Leitung oder auch eines Kunststoffrohres nicht nur an einer Stelle des Meßsensors beobachtet, sondern über mehrere Stellen hinweg verfolgt wird. Dies ermöglicht es in vorteilhafter Weise, die Meßgenauigkeit des zugrundeliegenden Verfahrens weiter zu erhöhen.

Es ergibt sich für die Phasenlage des Meßsignals eine charakteristische Abhängigkeit von der Tiefe des Objektes und der lateralen Verschiebung der Sensorvorrichtung. Ein Abgleich gemessener Daten mit den bekannten Eigenschaften des Sensors, wie sie bei einer Referenzmessung bestimmt worden sind, ermöglicht somit die Realisierung einer höhere Genauigkeit und Störempfindlichkeit.

Zur Erhöhung der Messgenauigkeit des zugrundeliegenden Verfahrens, wird die Meßgröße als Funktion von mehr als einer Meßfrequenz gemessen und ausgewertet. Dazu wird ein spektral breiter Signalimpuls in die kapazitive Sensorvorrichtung eingekoppelt und das Meßsignal M(t) bei verschiedenen Frequenzen auch zeitlich wieder durch einen Abtastschaltkreis ausgewertet. Es ist mit dem erfindungsgemäßen Verfahren daher in vorteilhafter Weise möglich, Eindeutigkeitsprobleme der Phasenmessung zu eliminieren sowie eine höhere Meßgenauigkeit durch redundante Meßdaten zu erzielen.

Das erfindungsgemäße Verfahren findet Anwendung in einem erfindungsgemäßen Meßgerät zur Ortung eingeschlossener Objekte, beispielsweise in Wänden, Böden und/oder Decken.

Ein erfindungsgemäßes Ortungsgerät weist die Merkmale des Anspruchs 17 auf.

Ein solches erfindungsgemäßes Ortungsgerät weist in vorteilhafter Weise eine geräteinterne Kalibrierungsvorrichtung auf, die es ermöglicht sowohl ein Referenzsignal unter definierten, standardisierten Bedingungen, beispielsweise für Lufttemperatur, Luftdruck und Luftfeuchtigkeit, sowie auch ein jeweils vor Ort zu messendes Kalibrierungssignal aufzunehmen. Das erfindungsgemäße Ortungsgerät besitzt daher Schaltmittel, die es ermöglichen ein entsprechendes Meßsignal auf die Kalibrierungsvorrichtung zu geben. Zur Erzeugung definierter Referenz- bzw. Kalibrierungssignale wird eine definierte Impedanz benutzt, die sich beispielsweise durch eine Kurzschlußleitung für das Detektionssignal realisieren läßt.

Das erfindungsgemäße Ortungsgerät weist in vorteilhafter Weise Mittel zur Speicherung von Materialdaten, insbesondere von ermittelten Referenzwerten der Kalibrierungsgrößen, auf. So können beispielsweise Dielektrizitätskonstanten bzw. Konstanten der dielektrischen Eigenschaften von Referenzmaterialien in Speicherelementen des erfindungsgemäßen Ortungsgerät abgelegt sein und im Verlauf der Auswertung des Meßsignales von einem entsprechenden Algorithmus ausgelesen werden.

In vorteilhafter Weise besitzt das erfindungsgemäße Ortungsgerät Mittel, die es ermöglichen Referenzwerte der Kalibrierungsgrößen bereits direkt bei der Fertigung des Gerätes in das Gerät einzuspielen und abzuspeichern. Auf diese Weise ist es möglich, jedem Gerät definierte Referenzwerte, die unter standardisierten Meßbedingungen an standardisierten Meßobjekten gewonnen worden sind dem Ortungsgerät und damit dem auswertenden Verfahren zur Verfugung zu stellen.

In vorteilhafter Weise weist das erfindungsgemäße Ortungsgerät darüber hinaus eine Anzeigevorrichtung auf, die es ermöglicht, die mit dem erfindungsgemäßen Verfahren georteten Gegenstände in einer informationsdichten aber intuitiven grafischen Darstellung, ortsäufgelöst dem Anwender zu zeigen. Insbesondere ermöglicht das erfindungsgemäße Verfahren die Anzeige der Lage, als auch der Tiefe eines eingeschlossenen Objektes in Echtzeit noch während des eigentlichen Meßvorganges.

Das erfindungsgemäße bzw. das zugrundeliegende erfindungsgemäße Verfahren ermöglicht dem Anwender damit eine genaue Lokalisierung eines in einem Medium eingeschlossenen Objektes in allen drei Dimensionen des Raumes. Darüber hinaus ist es möglich mit dem erfindungsgemäßen Verfahren Informationen über die Größe des eingeschlossenen Objektes zu erhalten.

Zeichnung

In der Zeichnung ist ein Ausführungsbeispiel des erfindungsgemäßen Verfahrens dargestellt, das in der nachfolgenden Beschreibung näher erläutert werden soll. Die Figuren der Zeichnung, deren Beschreibung sowie die auf das erfindungsgemäße Verfahren bzw. das dieses Verfahren nutzende Meßgerät gerichteten Ansprüche enthalten zahlreiche Merkmale in Kombination. Ein Fachmann wird diese Merkmale auch einzeln betrachten und so zu weiteren sinnvollen Kombinationen zusammenfassen

Es zeigen:

Fig. 1 eine schematische Darstellung der dem erfindungsgemäßen Verfahren zugrundeliegenden Meßsituation,

Fig. 2 ein Blockschaltbild zur Impedanzmessung nach dem erfindungsgemäßen Verfahren,

Fig. 3 eine symbolische Darstellung der Temperaturabhängigkeit des ausgewerteten Messsignales $M(\omega)$,

Fig. 4 ein Blockdiagramm zur Darstellung von Verfahrensschritten zur Aufnahmen von Referenzwerten,

Fig. 5 ein Blockdiagramm zur Darstellung der Verfahrensschritten des erfindungsgemäßen Verfahrens.

Beschreibung eines Ausführungsbeispiels

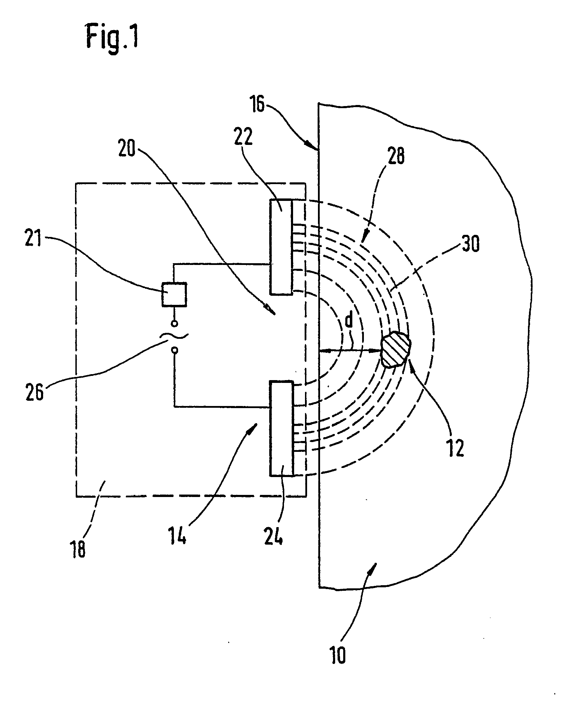

Fig. 1 zeigt die schematische Darstellung einer typischen Meßsituation zur Anwendung des erfindungsgemäßen Verfahrens bzw. zur Nutzung des Meßgerätes. Ein in einem Medium 10 eingeschlossenes Objekt 12 soll mit Hilfe einer kapazitiven Sensorvorrichtung 14 detektiert werden. Das eingeschlossene Objekt 12 befindet sich in einem Abstand d von einer Oberfläche 16 des einschließenden Mediums 10. Ein Meßgerät 18, welches u.a. den kapazitiven Sensor 14 enthält, wird auf die Oberfläche 16 des das Objekt 12 einschließenden Mediums 10 aufgebracht. Die kapazitive Sensorvorrichtung 14 besteht im Wesentlichen aus einem Meßkondensator 20 der zwei Kondensatorelektroden 22 bzw. 24 aufweist. Lediglich zur grafischen Verdeutlichung des Meßprinzips sind diese Kondensatorelektroden 22 und 24 in der Fig. 1 nebeneinander gezeichnet. In einer realen kapazitiven Sensorvorrichtung werden die Elektroden eines Meßkondensators im Wesentlichen parallel zueinander angeordnet sein. Die gewünschte Richtwirkung des elektrischen Feldes des Messkondensators 20 wird durch entsprechende Elektroden oder geometrische Mittel erzeugt.

Durch Anlegen einer elektrischen Spannung 26 wird ein elektrisches Feld 28 zwischen den Elektroden 22 bzw. 24 des Meßkondensators 20 des Meßgerätes 18 erzeugt. Legt man an die beiden Elektroden des Meßkondensators insbesondere eine Wechselspannung an, so fließt zwischen den Kondensatorelektroden entlang der das elektrische Feld 28 beschreibenden Feldlinien 30 ein sogenannter Verschiebestrom. Dieser Verschiebestrom I ist bei fester Spannung U um so größer, je geringer die Impedanz, d.h. der komplexe Widerstand Z des Meßkondensators 20 ist. Der Verschiebestrom I kann beispielsweise direkt über eine Amperemeter 21 oder auch über eine mit dem Verschiebestrom korrelierten Messgröße M, wie beispielsweise einem Spannungssignal gemessen werden.

Die Impedanz Z des Meßkondensators 20 wird im Wesentlichen bestimmt durch die zwischen den Kondensatorelektroden 22 bzw. 24 befindliche Materie. Wird ein solcher Meßkondensator 20 nun in die Nähe eines eingeschlossenen Objektes 12 gebracht, so ändert sich die Zusammensetzung der Materie in dem vom elektrischen Feld 28 überstrichenem Bereich. Insbesondere ergibt sich durch ein eingeschlossenes Objekt 12 eine geänderte Dielektrizitätskonstante $\varepsilon$ und damit eine geänderte Impedanz Z im Vergleich zu einem Medium 10 ohne eingeschlossenem Objekt 12.

Die durch das eingeschlossene Objekt 12 verursachte Änderung der Dielektrizitätskonstanten sowie die damit einhergehende Änderung der Impedanz Z des Meßkondensators entspricht einer geänderten Kapazität C des Meßkondensators.

Die Vergrößerung der Kapazität C des Meßkondensators 20 bzw. die daraus resultierende Vergrößerung des Verschiebestromes I zwischen den Kondensatorelektroden ist in Fig. 1 durch eine Vergrößerung der Feldliniendichte in der Darstellung des elektrischen Feldes 28 im Feldlinienbild verdeutlicht.

Das Einbringen eines Materials mit einer größeren Dielektrizitätskonstanten e als der entsprechenden Konstanten des umgebenden Mediums 10 in den vom kapazitiven Sensor 14 erzeugten Feldbereich 28 führt zu einer Verdichtung der Feldlinien, ein Objekt mit geringerer Dielektrizitätskonstante als das umgebende Material führt im Bereich des eingeschlossenen Objektes zu einer Reduzierung der Feldliniendichte.

Die Kapazitätsänderung aufgrund eines eingeschlossenen Objektes bzw. die Veränderung des Verschiebestromes am kapazitiven Sensor läßt sich an Hand von verschiedenen elektronischen Schaltungen messen und auswerten.

Beispielsweise kann die Eigenfrequenz eines Schwingkreises, welcher gebildet wird durch dem Meßkondensator und mindestens einer dazu in Reihe oder parallel geschalteten Spule genutzt werden. Nach Anregung durch einen kurzen elektrischen Impuls wird ein solcher Schwingkreis eine gedämpfte Schwingung seiner Resonanzfrequenz ausführen. Ein zeitaufgelöstes Vermessen dieser Resonanzfrequenz ermöglicht damit Rückschlüsse auf die beteiligten Kapazitäten und somit auf den Verschiebestrom.

Alternativerweise ist eine direkte Vermessung des Verschiebestroms durch den Meßkondensator bei Anlegen einer konstanten Wechselspannung fester Frequenz möglich.

Im erfindungsgemäßen Verfahren wird nicht direkt der elektrische Verschiebestrom I der kapazitiven Sensorvorrichtung 14 gemessen, sondern zur Auswertung des Detektionssignals wird eine frequenzabhängige Meßgröße M vermessen, die in nahezu linearer Abängigkeit zum Verschiebestrom der kapazitiven Sensorvorrichtung steht. Als Messgröße M wir bei dem erfindungsgemäßen Verfahren insbesondere eine mit der Verschiebestronm korrelierte elektrische Spannung vermessen. D.h. es gilt für die genutzte Meßgröße M:

$$M = M(\omega) = \alpha(\omega) + \beta\,(\omega) * I\,(\omega)$$

Die komplexe Meßgröße M(ω) wird in linearer Näherung des Verschiebestromes I(ω) des Meßkondensators ausgewertet. Dabei beschreibt α(ω) ein internes Übersprechen der Kondensatorelektroden und β(ω) berücksichtigt die Frequenzcharakteristik sowie Phasenverzerrungen auf den elektrischen Leitungen innerhalb der Auswerteschaltung und des Anpaßnetzwerk der kapazitiven Sensorvorrichtung.

α(ω) und β(ω) sind frequenzabhängige Konstanten, die unabhängig meßbar sind. Diese können beispielsweise durch eine Referenzmessung an definierten Impedanzen sehr genau bestimmt werden, so dass durch die Messung von M auch der Verschiebestrom gemessen wird.

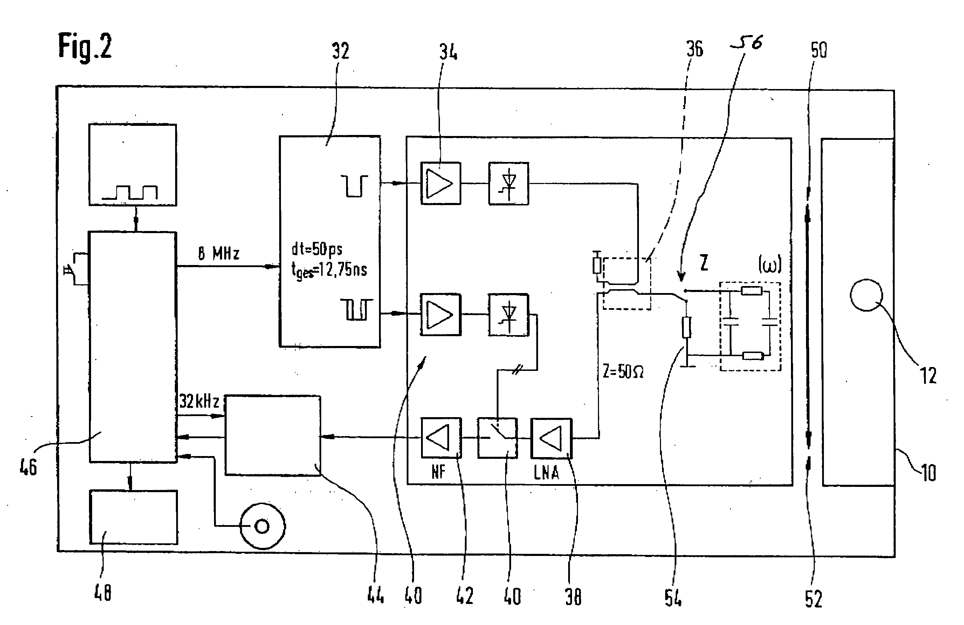

Fig. 2 zeigt ein Ausführungsbeispiel für eine Auswerteschaltung, wie sie im Rahmen des erfindungsgemäßen Verfahrens genutzt werden kann. Ein von einer Zeitbasis 32 gesteuerter Pulsgenerator 34 erzeugt einen zeitlich kurzen, spektral breiten Spannungsimpuls der über einen Wellenkoppler 36 in die kapazitive Sensorvorrichtung 14 eingespeist werden kann. Die Kapazität des Meßkondensators 20 und damit die Impedanz Z des Sensors sind abhängig vom dielektrischen Medium, welches das elektrische Feld der Kondensatorelektroden durchdringt.

Wird die kapazitive Sensorvorrichtung in die Nähe eines Objektes 12 gebracht so kommt es zu Feldverzerrungen des elektrischen Feldes aufgrund der geänderten Dielektrizitätskonstanten des Kondensatorfeldes. Die Impedanz Z wird dadurch geändert und ist über den Verschiebstrom beziehungsweise die abgeleitete Messgröße M(ω) messbar. Die Impedanz des kapazitiven Sensors wird als ein zeitabhängiges Spannungssignal U(t) durch den Richtkoppler 36 wieder ausgekoppelt, verstärkt und einer Abtasteinheit 40 zugeführt, in der der Betrag und die Phase des Messsignales bestimmt wird, was im Folgenden etwas genauer beschrieben wird.

An dem Punkt an dem der Messsensor 14 an die wellenwiderstandsrichtig abgestimmte Leitung angeschlossen wird, erfolgt eine mehr oder weniger ausgeprägte Reflexion der vom Generator über den Wellenkoppler 36 eingekoppelten Spannungen. Die Amplitude und Phase des an diesem Punkt reflektierten Signals spiegelt die Differenz der Impedanz Z des Sensors 14 und Leitungswellenwiderstand wieder und gestattet, auf Betrag und Phase der Impedanz des Sensors 14 zurückzuschließen und somit Betrag und Phase des Stromflusses durch den Sensor 14 zu bestimmen. Die Bestimmung von Betrag und Phase des Stromflusses durch den Sensorkondensator 14 kann daher auf die Bestimmung von Betrag und Phase der am Anschlusspunkt des Sensors 14 reflektierten Spannung U zurückgeführt werden.

Die am Anschlusspunkt reflektierten Signale laufen über den Wellenkoppler zurück. Die durch das Übersprechen im Wellenkoppler 36 im Sendezweig induzierten Signale sind im Vergleich zu den direkt in Richtung des Detektionszweiges rücklaufenden Signalanteile vernachlässigbar. Die am Eingang der Detektionsschaltung anliegende Spannung V spiegelt, abgesehen von den geringfügigen Verlusten am Wellenkoppler 36 und der Laufzeitdifferenz,die am Anschlusspunkt des Sensors 14 reflektierte Spannung U wieder.

Die sich hinter dem Wellenkoppler 36 ergebende (in der Regel geringe) Spannung wird im Detektionszweig vorteilhaft zunächst in einem Hochfrequenzverstärker 38 verstärkt. Anschließend erfolgt eine Abtastung der Spannung zu definierten Zeitpunkten T. Die Zeitpunkte zu denen die Spannung gemessen wird, werden dabei durch einen Abtastpuls vorgegeben. Um eine Bestimmung der Phase der reflektierten Spannung relativ zur Phase der vom Generator erzeugten Spannung zu ermöglichen, ist es wichtig, dass der Generator des Sendesignals und der Generator des Abtastpulses phasenstarr gekoppelt sind. Dies wird durch Einsatz der Zeitbasis sichergestellt

Die bei der Frequenz f am Abtastglied anliegenden Spannungsteile

$$V(f) = v(f) * \exp(i\varphi(f))$$

hängen gemäß der Beziehung

$$W(T) = Re \, (exp \, (i *2 \, \pi *f *T) * V(f))$$

mit der hinter dem Abtastglied gemessenen Spannung W(T) zusammen. Ein Verschieben des Abtastzeitpunktes T gestattet somit auf Betrag und Phase der Spannung V bei der Frequenz f zurückzuschließen.

Die Spannung W wird vorteilhaft zunächst in einem Niederfrequenzverstärker verarbeitet um anschließend in einem Analog-Digital-Wandler erfasst zu werden. Durch Vermessung der Spannung W zu verschiedenen Zeitpunkten T ist es somit möglich, neben der Amplitude auch die Phase der reflektierten Spannungsteile zu ermitteln und somit auf Betrag und Phase der im Sensor fließenden Ströme zurückzuschließen.

Nach dem Analog-Digitalwandler 44 wird das Messsignal an einen Digitalen Signalprozessor 46 weitergeleitet.

Das DSP-Element 46 übernimmt sowohl weitere Signalverarbeitung als auch die Steuerung der Zeitbasis zur Erzeugung sowohl des Anregeimpulses als auch des Abtastimpulses. Das DSP-Element 46 ermöglicht es, die ausgewerteten Meßwerte, d.h. insbesondere die Tiefe des eingeschlossenen Objektes in der Wand, sowie dessen laterale Position relativ zum Meßsensor, in Echtzeit, d.h. noch während des Meßvorganges, auf einem Display 48 wiederzugeben. Auf diese Weise ist es mit dem erfindungsgemäßen Verfahren möglich, bereits während das Gerät noch über beispielsweise eine Wand verfahren wird, einem Anwender im Display zu zeigen, wo und in welcher Tiefe der Wand Objekte eingeschlossen sind.

Zur Gewinnung der lateralen Ortsposition kann die kapazitive Meßvorrichtung in zwei entgegengesetzte Richtungen 50 bzw. 52 über das zu untersuchende Medium verfahren werden. Eine entsprechende Wegsensorik, die die aktuelle Position der kapazitiven Sensorvorrichtung an den digitalen Signalprozessor weiter reicht, ermöglicht die korrelierte Darstellung sowohl der Objekttiefe als auch der lateralen Position des Objektes.

Für das erfindungsgemäße Verfahren ist vorgesehen, dass zu Kalibrierungszwecken anstelle des Meßkondensators 20 eine definierte Referenzimpedanz 54 gemessen werden kann. Dazu besitzt die elektrische Schaltung zur Erzeugung und Auswertung des Detektionssignales Schaltmittel, die im Ausführungsbeispiel der Fig. 2 als symbolischer Schalter 56 dargestellt sind. Diese Schaltmittel ermöglichen es, den Anregungsimpuls nicht in den Meßkondensator 20, sondern zur Referenzimpedanz 54 umzuleiten. Diese definierte Referenzimpedanz 54 kann beispielsweise durch Kurzschließen der Signalleitung erzeugt werden. Eine andere Möglichkeit zur Realisierung einer geräteinternen definierten Impedanz ist beispielsweise ein "offenes Ende" der Signalleitung. Auf diese Weise besitzt das erfindungsgemäße Verfahren bzw. das Meßgerät eine verfahrensinterne bzw. geräteinterne Kalibriervorrichtung, mit der es den zugrunde liegenden Verfahren möglich ist, beispielsweise thermische Driften rechnerisch zu kompensieren.

So ist es insbesondere möglich durch die Kalibrierungsmessung an der definierten Impedanz 54 die durch das elektrische Netzwerk beeinflußten Konstanten $\alpha(\omega)$ und $\beta(\omega)$, die den Zusammenhang zwischen dem elektrischen Verschiebestrom I der kapazitiven Sensorvorrichtung und der gemessenen Größe $M(\omega)$ herstellen, zu bestimmen und auftretende Driften des Meßsignals $M(\omega)$ gegenüber dem Verschiebestrom $I(\omega)$ nach einer solchen Referenzmessung zu kompensieren.

Wesentliche Drifteffekte ergeben sich vor allem aus Temperaturänderungen und Alterungsprozessen der beteiligten Komponenten. So kann es beispielsweise auch zu zusätzlichen Zeitverzögerungen $\delta T$ zwischen dem Anregungs- und dem Abfrageimpuls kommen, was zu Verzerrungen des niederfrequenten Signales führen würde. Da solch eine zusäztliche Zeitverzögerung bei dem fouriertransformierten Messsignal $M(\omega)$ lediglich zu einem multiplikativen Faktor führt, lässt sich solch eine Drift der Abtastzeitpunktes noch relativ einfach aus dem Datensatz herausrechnen.

Des Weiteren kann die Pulsleistung sowie die spektrale Form speziell des Anregungsimpulses einer thermischen Drift unterworfen sein. Eine Drift der Frequenzcharakteristik des Hochfrequenzverstärkers läßt sich durch eine solche Referenzmessung ebenfalls kompensieren.

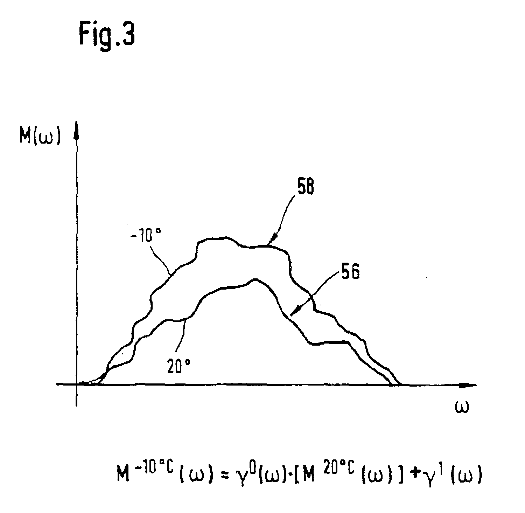

Zur Kompensation von Veränderungen im Gerät, also beispielsweise temperaturbedingten Driften, wird eine lineare Korrekturfunktion für das Meßsignal benutzt. Abbildung 3 zeigt in schematischer Weise den Temperatureinfluß auf die Meßgröße $M(\omega)$. Die Meßgröße $M(\omega)$ unterliege einer starken temperaturabhängigen Änderung. So zeigt die Kurve 56 das frequenzabhänigge Messsignal $M(\omega)$ bei einer Temperatur von 20°C. Die ebenfalls dargestellte Messkurve 58 gibt das gemessen Signal $M(\omega)$ bei einer Temperatur von -10°C wieder. Dass der Auswertung des Meßsignals zugrundeliegende Verfahren geht nun von einer linearen Abhängigkeit der der beiden Messkurven bei unterschiedlicher Temperatur aus.

Zur Kompensation dieses Temperatureffektes werden daher zwei Korrekturfaktoren $\gamma^0(\omega)$ sowie $\gamma^1(\omega)$ um den Zusammenhang der unter Kalibrierungsbedingungen (z.B 20°C) gemessenen Meßgröße $M(\omega)$ zur Meßgröße $M(\omega)$, wie sie sich bei einer Vorort-Messung einstellt, d h. es gilt beispielsweise:

$$M^{-10°}(\omega) = \gamma^0(\omega) * (M^{20°}(\omega)) + \gamma^1(\omega)$$

So wird beispielsweise für das erfindungsgemäße Verfahren die Meßgröße M(ω) für Kalibrierungsbedingungen d.h. bei definierter Temperatur und einer Referenzimpedanz, die beispielsweise durch Luftmessung, einen Kalibrierstein oder einen kurzgeschlossenen Sensor realisiert sein kann, gemessen.

Wird nun unter realen Betriebsbedingungen vor Ort eine Kalibriermessung mit der gleichen definierten Impedanz, also wiederum eine Luftmessung, eine Messung an einem Kalibrierstein bzw. eine Messung mit einem kurzgeschlossenen Sensor durchgeführt, so kann aus dem nun aufgrund von Drifteffekten veränderten Meßwert M(ω) auf die Korrekurkonstanten $\gamma^0(\omega)$ und $\gamma^1(\omega)$ geschlossen werden. Die so ermittelten Korrekturgrößen werden in einer Speichereinheit abgelegt, so dass sie bei einer späteren Signalauswertung abgerufen werden können.

Wird eine Kalibriermessung mit definierter Impedanz vor der eigentlichen Messung zur Ortung eines eingeschlossenen Objektes durchgeführt, lassen sich die mit der Kalibriermessung aktuell gewonnen Korrekurgrößen $\gamma^0(\omega)$ und $\gamma^1(\omega)$ auch zur Korrektur der Meßgröße M(ω) beim eigentlichen Meßvorgang nutzen.

Auf diese Weise ist es dem erfindungsgemäßen Verfahren möglich, Effekte, die in verfälschender Weise auf die zu verarbeitende Meßgröße einwirken, aus dem gemessenen Meßsignal herauszurechnen. Zu diesen allgemein als Drifteffekten bezeichneten Einflußnahmen auf die Meßgröße der kapazitiven Sensorvorrichtung gehören insbesondere Temperaturänderungen, Änderungen in der Feuchte, Änderungen, die hervorgerufen werden durch die Alterung von Bauteilen sowie auch Änderungen durch eine Variation der Versorgungsspannung des Meßgerätes. So kann beispielsweise das Ausführungsbeispiel eines Meßgerätes in Form eines handgehaltenen, batteriebetriebenen Meßgerätes ein Abfall der Batteriespannung noch über einen gewissen Zeitraum kompensiert werden, ohne dass diese Spannungsvariation zu einem deutlichen Einfluß auf die Qualität der Meßergebnisse führen würde.

Neben den beschriebenen Drifteffekten führen auch Exemplarstreuungen einzelner Bauteile zu einer unterschiedlichen Meßcharakteristik jedes einzelnen Meßgerätes, die über die beschriebene Korrekturfunktion kompensiert werden kann. Das erfindungsgemäße Verfahren ermöglicht somit die Kompensation von Drifteffekten oder auch von Exemplarstreuungen durch den Vergleich eines im Gerät gespeicherten Referenzsignales mit einem zum Meßzeitpunkt aufgenommenen Kalibriersignal. Durch diese Vergleichsmessung läßt sich eine lineare Korrekturgröße für das Meßsignal ermitteln, die es dem erfindungsgemäßen Verfahren ermöglicht, die aktuell vor Ort gemessenen Meßwerte auf Referenzbedingungen zurück zurechnen.

Insbesondere ist es vorteilhaft, eine Referenzmessung direkt nach Fertigung eines Gerätes, beispielsweise noch im Werk unter definierten Kalibrierungsbedingungen durchzuführen. Diese Messung kann dann später mit den eigentlichen Ortungsmessungen vor Ort abgeglichen werden.

Auch ist es möglich, eine solche Referenzmessung, die ein definiertes Meßsignal M(ω) ergibt mittels eines "Master-Meßgerätes" durchzuführen und die für das "Master-Gerät" ermittelten Referenzwerte in Form eines Kennfeldes in weitere Meßgeräte direkt nach der Fertigung einzuspielen. In diesem Fall wäre es auch möglich beispielsweise Exemplarstreuungen der Richtcharakteristik des elektrischen Feldes des Meßkondensators der Einzelgeräte zu kompensieren.

Unterschiedliche Richtcharakteristiken aufgrund von mechanischen bzw. geometrischen Unterschieden der Kondensatorelektroden bzw. entsprechender Richtelektroden für das elektrische Meßfeld bedeuten Unterschiede bezüglich des detektierten Ortes für ein eingeschlossenes Objekt und machen die Vergleichbarkeit der mit verschiedenen Geräten gewonnen Meßdaten schwierig.

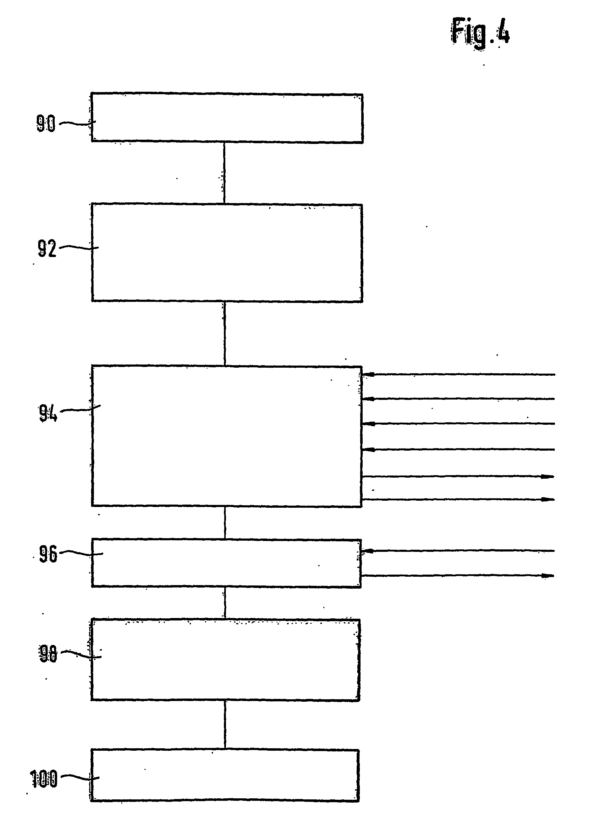

Fig. 4 zeigt an Hand eines Blockdiagrammes den Ablauf der Messung von Referenzwerten, die beispielsweise bereits direkt nach der Fertigung des Gerätes noch im Werk gemessen in einem Speicherelement des Meßgerätes abgelegt werden können. Im Schritt 90 wird eine Benutzerführung in ein Speicherelement des Meßgerätes eingeschrieben, die als animierte Filmsequenz auf einem Display des Meßgerätes wiedergebbar ist, und so dem Benutzer die zur Kalibrierung des Meßgerätes vor Ort durchzuführenden Verfahrensschritte näherbringt.

Im Verfahrensschritt 92 werden Referenzmessungen durchgeführt und im Gerät abgespeichert, die dazu dienen die geräteindividuellen Systemparameter zu bestimmen. Dazu wird das an definierten Impedanzen vermessene Meßsignal ausgewertet und eine Korrekturfunktion linearer Ordnung für jedes einzelne Meßgerät erstellt. Mit Hilfe dieser Korrekturfunktion ist es möglich, Exemplarstreuungen, beispielsweise der mechanischen Ausführung der kapazitiven Sensorvorrichtung, aus dem späteren vor Ort gemessenen Signal herauszurechnen.

In Verfahrensschritt 94 wird das Meßgerät auf verschiedene, definierte Untergrundmaterialien eingemessen. Die Meßwerte dieser Referenzmessungen, beispielsweise an Luft, Beton, Metall sowie Ytong und weiterer verbreiteter Baumaterialien werden im Gerät abgespeichert. An Hand der bekannten Dielektizitätskonstanten dieser definierten Materialien lassen sich die durch das Detektionsnetzwerk bedingten Konstanten $\alpha(\omega)$ sowie $\beta(\omega)$, die den Zusammenhang zwischen dem dielektrischen Verschiebestrom der kapazitiven Sensorvorrichtung und dem zur Auswertung herangezogenen Meßsignal M(ω) bilden, bestimmen. Durch eine solche Referenzmessung ist es also möglich, die Signalverzerrungen, die aufgrund von Phasenverzerrungen sowie der Frequenzcharakteristik der Signalleitungen, bzw. ein internes Übersprechen zwischen den Elektroden des Meßkondensators sich einstellen, zu bestimmen. Auf diese Weise ist es möglich, bei einer späteren Bestimmung des Meßsignals M(ω) vor Ort mit Hilfe der dann bekannten Koeffizienten $\alpha(\omega)$ bzw. $\beta(\omega)$ sehr genau auf den zugrunde liegenden dieelektrischen Verschiebestrom zurückzuschließen.

In Verfahrensschritt 94 werden ebenfalls Interpolationsparameter für das im Verfahren zugrundegelegte Model des einschließenden Mediums gewonnen. Das erfindungsgemäße Verfahren benutzt ein numerisches Model für das einschließende Medium, welches mehrere Materialparameter definierter Referenzmaterialien benutzt. Durch eine Vergleichsoptimierung zwischen dem vor Ort gemessenen Signal des umgebenden Mediums mit den Parametern des im Meßgerät abgelegten Models ist es möglich die dielektrischen Eigenschaften des gemessenen umgebenden Mediums sehr genau zu bestimmen. Im Wesentlichen wird eine Interpolation der dem Model zugrundeliegenden Referenzparameter auf den vor Ort gemessenen Wert des einschließenden Mediums genutzt.

In Verfahrensschritt 96 wird eine Bestimmung eines Geometriefaktors der kapazitiven Sensorvorrichtung durchgeführt. Dazu wird ein Referenzsignal an einem definierten, räumlich sehr begrenzten Referenzkörper, der in einem bekannten Medium eingeschlossen ist, vermessen. Aufgrund von mechanischen oder geometrischen Abweichungen der Elektroden der kapazitiven Sensorvorrichtung kann es zu Unterschieden in der Richtcharakteristik des Meßkondensators kommen, so dass eine Unsicherheit in der genauen Bestimmung des Ortes des eingeschlossenen Gegenstandes die Folge wäre. In Verfahrensschritt 96 werden daher Korrekturparameter zur Berücksichtigung der Abweichungen der Richtcharakteristik einzelner Meßgeräte für jedes einzelne Meßgerät ermittelt und in diesem Meßgerät abgelegt, so dass der auswertende Algorithmus diese Parameter abrufen und berücksichtigen kann.

Verfahrensschritt 98 der in Fig. 4 gezeigten Werkseinstellung von Referenzwerten für das erfindungsgemäße Verfahren bzw. das Meßgerät ermittelt aus den durchgeführten Referenzmessungen Schwellwerte für die Objektdetektion. Mit Hilfe dieser Schwellwerte entscheidet der verarbeitende Algorithmus ob ein Objekt als detektiert oder nicht gilt. Diese Schwellwerte sind abhängig von der Meßgenauigkeit jedes einzelnen Gerätes sowie auch von entsprechenden Exemplarstreuungen.

Verfahrensschritt 100 der Fig. 4 bezeichnet das Ablegen zuvor ermittelten Einstellungen in einem Speicherelement des Meßgerätes. Mit Hilfe dieser abgelegten Referenzwerte und einer vor der eigentlichen Messung vor Ort durchzuführenden Kallibrierungsmessung ist es möglich, Störeinflüsse auf das Meßsignal weitgehendst auszuschalten, so dass ein extrem genauer Meßsensor realisiert werden konnte. Dabei ist besonders hervorzuheben, dass beispielsweise auch Kunststoffrohre mit diesem Meßsensor erkannt werden können. Wesentlichen Einfluß auf die erhöhte Leistungsfähigkeit des Meßgerätes bzw. des zugrundeliegenden erfindungsgemäßen Verfahrens hat die Aufnahme einer Vielzahl von Referenzwerten, die es ermöglichen, Störeffekte bei der späteren Signalauswertung herauszurechnen.

Ein zentraler Punkt des erfindungsgemäßen Verfahrens ist es, das auszuwertende Meßsignal $M(\omega)$ in zwei Anteile aufzuspalten. Das Meßsignal $M(\omega)$ wird in einen Untergrundanteil $UG(\omega)$, der von dem einschließenden Medium herrührt und in einen Einschlußanteil $E(\omega)$, der aus einem eingeschlossenen Objekt resultiert, aufgeteilt. Einschlußsignal als auch Untergrundsignal sind aufgrund der Messung der Signalgröße $M(\omega)$ sowohl in Phase als auch Amplitude bekannt. Dabei ist zu beachten, dass das durch dielektrische Einschlüsse vermittelte Einschlußsignal $E(\omega)$ extrem klein ist. Kapazitätsänderungen, welche es aufgrund eines eingeschlossenen Objektes zu bestimmen gilt, liegen bei dieelektrischen Einschlüssen, wie beispielsweise Kunststoffrohren, typischerweise im Subpikofarad-Bereich. Diese kleinen Änderungen resultieren bei einer angelegten Wechselspannung an den kapazitiven Sensor von beispielsweise einem Volt und einer Meßfrequenz von 100 KHz somit in Differenzen des Verschiebestroms von weniger als einem Mikroampere.

Aus diesem Grunde wird bei dem erfindungsgemäßen Verfahren eine Meßfrequenz im Gigahertzbereich genutzt, um selbst für geringste Kapazitätsänderungen aufgrund eines eingeschlossenen Objektes noch hinreichend große Änderungen im Meßsignal zu erzeugen. Das Untergrundsignal bezeichnet dabei das Signal, welches sich ohne Vorhandensein von Objekten ergebe. Es kann beispielsweise direkt neben einem Einschluß gemessen werden. Erfindungsgemäß wird ausgenutzt, dass das Untergrundsignal dominiert wird von Anteilen des Verschiebestromes welches durch die oberflächennahen Bereiche des elektrischen Meßfeldes erzeugt werden. Im Folgenden sei vorausgesetzt, dass das Untergrundsignal $UG(\omega)$ bekannt ist. Das Untergrundsignal $UG(\omega)$ setzt sich aus Verschiebeströmen $Iv(\omega)$ entlang der Feldlinien $v$ des elektrischen Feldes des Meßkondensators zusammen. Die einzelnen Feldlinien $v$ haben, wie beispielsweise der Fig. 1 zu entnehmen ist, unterschiedliche Längen. Man kann somit eine mittlere Feldlinienlänge L definieren, welche die Phase des Verschiebestromes angibt. Alle Phasen werden im Folgenden relativ zu dieser mittleren Phase angegeben Bringt man einen dielektrischen Einschluß in die Nähe der Meßelektroden der kapazitiven Sensorvorrichtung, so verändert sich die Stromverteilung des Verschiebestromes. In der Praxis kann man voraussetzen, dass diese Änderung durch ein eingeschlossenes Objekt klein ist, d.h. es gilt:

$$E(\omega) \ll UG(\omega).$$

Man kann daher näherungsweise annehmen, dass der Einfluß des dielektrischen Einschlusses zu einer Verstärkung oder zu einer Schwächung des Verschiebestroms Iv entlang einzelner Feldlinien v mit der Länge Lv führt. D. h. es gilt:

$$Iv(\omega)(\text{mit Einschluss}) =$$

$$= \xi * Iv(\omega)(\text{Untergrund}) * \exp( i*2\pi/\lambda(\omega)*(Lv-L))$$

Hierbei bezeichnet $\xi$ einen reellen Verstärkungs- oder Schwächungsfaktor. Ist die Dielektrizitätskonstante $\varepsilon$ des Einschlusses größer als das e des umgebenden Mediums, so gilt $\xi > 1$. Die Kapazität des Meßkondensators wird erhöht und der Verschiebestrom wird vergrößert. Andernfalls gilt $\xi < 1$. Ist der Einschluß klein genug, so dass nur Feldlinien einer bestimmten Länge Lv betroffen sind, so gilt näherungsweise:

$$E(\omega)= ( Iv(\omega)(\text{mit Einschluss})- Iv(\omega)(\text{Untergrund}) )$$

$$= (1-\xi)* \exp( i*2\pi/\lambda(\omega)*(Lv-L))*Iv(\omega)(\text{Untergrund})$$

Ist die Art des Einschlusses bekannt, beispielsweise ein metallischer Einschluß bzw. ein Hohlraum, so ist das Vorzeichen von $(1-\xi)$ bekannt.

Es gilt dann:

$$2\pi/\lambda(\omega)*(Lv-L)= - \Phi(\omega)+\Psi(\omega)$$

D.h. aus einem Vergleich der Phase des Signals $E(\omega)$ mit der Phase des Untergrundsignals $UG(\omega)$ läßt sich an Hand der Beziehung:

$$\lambda(\omega)/2\pi *(- \Phi(\omega)+\Psi(\omega)) +L = Lv$$

auf die Länge der betroffenen Feldlinien Lv zurück schließen. Die Länge der betroffenen Feldlinien hängt über einen Geometriefaktor $G(\omega,L)$ mit der Tiefe des Objektes zusammen.

In der Praxis führt das Gerät eine Mittelung über ein Ortsintervall [x,y] durch, in dem überwiegend keine Einschlüsse vorhanden sind. So ergibt der räumliche Mittelwert von $MW\_M(\omega)$ einen brauchbaren Ansatzpunkt für die Untergrundkomponente. Das heisst, wenn die Messgröße $M(Xj,\omega)$ an n Orten Xj erfasst wurde, so ist zur Bestimmung der Untergrundkomponente für alle j über $M(Xj.\omega)$ zu summieren und mit 1/N zu normieren.

Als mögliche Erweiterung dieses grundlegenden Mittelungsverfahrens ist es vorteilhaft, Bereiche mit starken Signalveränderungen, das heisst großen Abweichungen vom Mittelwert aus der Mittelwertbildung auszuschließen oder die Bildung des Mittelwerts durch die Bildung des Medians der Messdaten über den Ort zu ersetzen.

Es ist weiterhin möglich, anstelle der Mittelung über verschiedene Orte, im Speicher abgelegte tabellierte Untergrundsignale $MUG(\omega)$ heranzuziehen. Ist beispielsweise bekannt, dass es sich beim Untergrund um Beton handelt, so ist es möglich, im Speicher abgelegte Messwerte $MUG_{BETOn}(\omega)$, wie sie sich für einen homogenen Betonblock ergeben, als Untergrundsignal zu verwenden. Die Auswahl des abzuziehenden, gespeicherten Untergrundsignals kann sowohl automatisch, z.B. anhand eines Vergleichs eines geschätzten Untergrundsignals mit verschiedenen tabellierten Untergründen, oder mittels eines vom Benutzer zu bedienenden Schalters erfolgen.

Für den Untergrund wird ein numerisches Model benutzt, welches mindestens vier Materialparameter, beispielsweise die Dieelektrizitätskonstanten von bekannten Werkstoffen benutzt. Dem Model zugrundegelegt ist das Reflexionsverhalten elektromagnetischer Signale an dieelektrischen Grenzschichten. Zur Ermittlung des Materials des gemessenen, einschließenden Mediums wird die Gewichtung der Parameter im Model des einschließenden Mediums solange variiert, bis durch eine Vergleichsoptimierung ein dem gemessenen Untergrundsignal möglichst nahekommendes Modelsignal rekonstruierbar ist. Aufgrund einer Interpolation der Parameter des Modelmediums kann somit auf die Dieelektrizitätskonstante des gemessenen einschließenden Mediums geschlossen werden. Bei Kenntnis der Dieelektrizitätskonstanten des einschließenden Mediums läßt sich aus der Phaseninformation des Meßsignales, welches ausgeht vom eingeschlossenen Objekt, auf die Tiefe des eingeschlossenen Objektes im einschließenden Medium zurückschließen.

Erfindungsgemäß ist bei dem beschriebenen Verfahren vorgesehen, dass die Schwelle zur Detektion eingeschlossener Objekte variierbar ist. Durch eine Empfindlichkeitseinstellung ist es möglich, beispielsweise unrelevante Objekte, insbesondere mit einer periodischen Struktur, aus dem Meßsignal herauszurechnen, so dass diese bei einer späteren optischen Anzeige der Meßergebnisse nicht mehr in Erscheinung treten. Auch ist es durch das erfindungsgemäße Verfahren möglich, aufgrund eines gewählten, speziellen Bereichs von Phasenverschiebungen des Meßsignals eine Beschränkung des Meßbereichs auf einen gewünschten Tiefenbereich zu erzeugen. Auf diese Weise läßt sich die Selektion eines speziellen begrenzten Tiefenbereichs realisieren. Die angezeigte Meßtiefe in der optischen Wiedergabe des Displays des Meßgerätes läßt sich zwischen verschiedenen Werten (beispielsweise 6 bzw. 10 cm) umschalten.

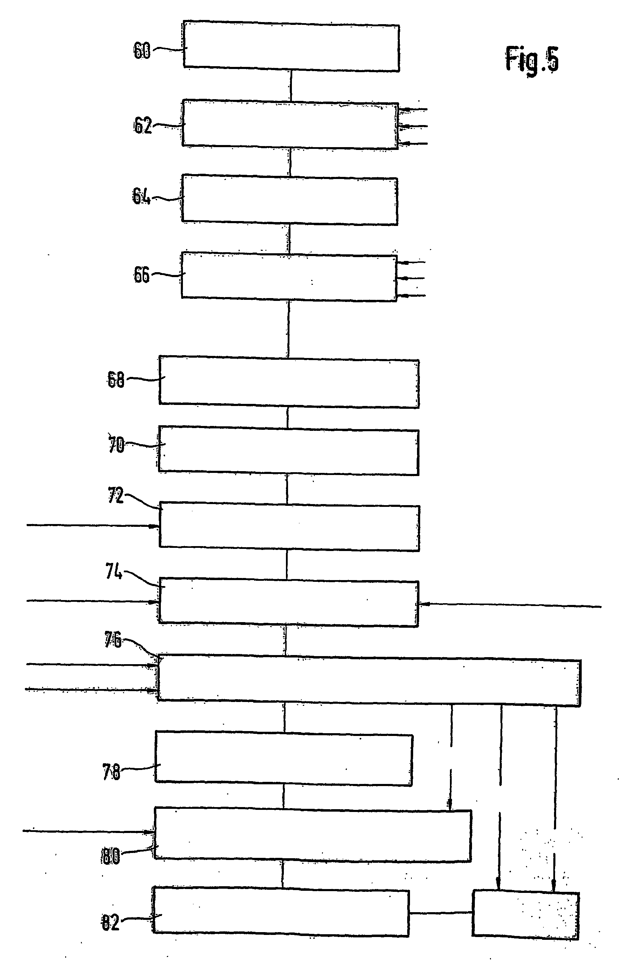

Abbildung 5 zeigt zur Übersicht ein Blockdiagramm zur Verdeutlichung der einzelnen Verfahrensschritte des erfindungsgemäßen Verfahrens.

Nach dem Einschalten des Gerätes in Schritt 60 erfolgt eine Systemabfrage für das Meßgerät. Die Systemabfrage 62 überprüft beispielsweise den Batteriestatus (Batteriespannung), den Innenwiderstand der Batterie sowie die vorliegende Temperatur. Anschließend wird in Schritt 64 eine Referenzmessung an einer definierten Impedanz durchgeführt. Dazu kann beispielsweise eine geräteinterne Referenzvorrichtung genutzt werden oder es kann auch eine Luftmessung durchgeführt werden. Diese Referenzmessung wird auch durchgeführt zur Bestimmung von EMV-Störungen, beispielsweise durch benachbarte Sendeanlagen. Solche EMV-Störungen lassen sich mit dem erfindungsgemäßen Verfahren später aus dem Meßsignal herausrechnen.

In Schritt 65 des erfindungsgemäßen Verfahrens erfolgt eine Wandkontaktüberprüfung, bei der durch Abfrage der entsprechenden Weggeber des Meßgerätes sichergestellt wird, dass das Meßgerät vorschriftsmäßig auf der zu untersuchenden Wand aufgesetzt ist. Alternativerweise kann der Wandkontakt auch durch die Auswertung des Messsignals der kapazitiven Sensorvorrichtung abgefragt werden. Ermittelt das Messgerät als umgebendes Medium Luft, so kann das Gerät nicht auf der Wand aufgesetzt sein.

Anschließend erfolgt der eigentliche Meßvorgang, bei dem in Verfahrensschritt 68 Rohdaten der kapazitiven Sensorvorrichtung gemessen und an den digitalen Signalprozessor weitergeleitet werden. In Verfahrensschritt 70, der den Beginn der Auswertung des Meßsignals darstellt, werden Störsignale durch extern Störquellen aus den Rohdaten herausgerechnet Anschließend erfolgt in Verfahrensschritt 72 eine erste Korrektur des Meßsignals aufgrund von Exemplarstreuungen. Dazu wird der werksseitig durch eine Referenzmessung ermittelte, geräteindividuelle Systemparameter, d.h. die entsprechenden Korrekaurkoeffizienten, berücksichtigt und das Meßsignal in beschriebener, linearer Weise transformiert. Verfahrensschritt 74 beschreibt die Korrektur von geräteinternen Drifteffekten wie beispielsweise Temperatur- und Alterungseinflüsse. Zur Ermittlung einer entsprechenden Korrekturfunktion für das Meßsignal $M(\omega)$ wird im Verfahrensschritt 74 ein Vergleich zwischen einer im Werk durchgeführten und im Gerät abgespeicherten Referenzmessung an einer definierten Impedanz sowie dem Ergebnis der aktuellen Referenzmessung nach Verfahrensschritt 64 durchgeführt. Für das so aufgearbeitete Meßsignal $M^*(\omega)$ wird nun in Verfahrensschritt 76 die beschriebene Trennung in Signalanteilen vom einschließenden Medium und Signalanteilen, die vom eingeschlossenen Objekt herrühren, durchgeführt. Über die im Gerät abgespeicherten Kenngrößen für Referenzmaterialien und ein entsprechendes mathematisches Modell für die Zusammensetzung des einschließenden Mediums wird das gemessene Wandmaterial durch Interpolation mit den Referenzwerten bestimmt. Insbesondere wird dem gemessenen Wandmaterial, bzw. dem einschließenden Medium, eine Dielektrizitätskonstante zugewiesen, die für die weitere Auswertung des Meßsignals benötigt wird.

Nach der Trennung des Detektionssignals in Signalanteile ausgehend vom einschließenden Medium bzw. ausgehend vom eingeschlossenen Objekt wird zur Bestimmung der genauen Ortsposition des eingeschlossenen Objektes in Verfahrensschritt 78 ein Geometriefaktor für die kapazitive Sensorvorrichtung berücksichtigt. Dieser Geometriefaktor berücksichtigt beispielsweise fertigungsbedingte geometrische Abweichungen in der Richtcharakteristik der kapazitiven Sensorvorrichtung. Diese geräteindividuellen Unterschiede können durch eine lineare Korrekturfunktion berücksichtigt und aus dem eigentlichen Meßsignal herausgerechnet werden. Unter Berücksichtigung der werksseitig eingestellten Schwellwerte für die Objektdetektion wird in Verfahrensschritt 80 durch die Signalverarbeitung die Entscheidung getroffen, ob ein Objekt geortet worden ist oder nicht. Im Fall einer positiven Entscheidung wird anschließend die Objektgröße, dessen relative Lage zum Meßgerät sowie die Objekttiefe des eingeschlossenen Objektes über die beschriebene Auswertung des Betrages und der Phase der Meßgröße $M^*(\omega)$ bestimmt. Insbesondere wird die Tiefe des eingeschlossenen Objektes in der Wand aus der Phase der Meßgröße $M^*(\omega)$ sowie der in Verfahrensschritt 76 ermittelten Dielektrizitätskonstanten des Rundmaterials ermittelt.

In Verfahrensschritt 82 wird das resultierende Meßergebnis in grafischer Form auf dem Display des Meßgerätes angezeigt. Dazu wird die Position des georteten Objektes relativ zur aktuellen Position des Meßgerätes, die Objektgröße sowie die Objekttiefe mittels symbolischer Darstellungen derart auf der Anzeigevorrichtung des Meßgerätes wiedergegeben, dass der Anwender ein Schnittbild der untersuchten Wand erhält.

Insbesondere ist es möglich auf dem Display des Meßgerätes beispielsweise auch in grafischer Weise eine zulässige Bohrtiefe anzuzeigen, die möglich ist, ohne das geortete Objekt beim Bohrvorgang zu treffen. Die Darstellung der Meßergebnisse auf dem Display des Meßgerätes erfolgt in Echtzeit, so dass noch während das Meßgerät über einen Wandabschnitt verfahren wird, das geortete Objekt lediglich mit einer kurzen zeitlichen Verzögerung auf dem Bildschirm des Meßgerätes dargestellt wird.

Das erfindungsgemäße Verfahren sowie das entsprechende Messgerät sind nicht auf das in der Beschreibung und den Zeichnungen dargestellte Ausführungsbeispiel beschränkt.

Bezugszeichenliste der Figuren 4 und 5

| 90 | Benutzerführung bei der Kalibrierung |
|---|---|
| 92 | Bestimmung der Systemparameter an Hand einer Referenzmessung, Berechnung der Koeffizienten zum Herausrechnen von Exemplarstreuungen |
| 94 | Einmessen des Gerätes auf verschiedenen Untergrundmaterialien, Eingangssignale: Luftmessung, Ytong-Messung, Betong-Messung, Metall-Messung; Ausgangsparameter: $\alpha$, $\beta$, Interpolationsparameter |
| 96 | Bestimmung der Geometriefaktoren des Sensors; Eingangsparameter: Messung des Metallstabes in Beton |
| 98 | Ermitteln der Schwellwerte für Objektdetektion |
| 100 | Ablegen der ermittelten Einstellungen im Speicher |
| 60 | Ein- bzw. Ausschalten des Gerätes |
| 62 | Überprüfung des Batteriestatus; Eingangsparameter: Temperatur, Batteriespannung, Innenwiderstand |
| 64 | Referenzmessung, Messung EMV-Störungen |
| 66 | Wandkontaktüberprüfung; Eingangsparameter. Weggeber 1, Weggeber 2, Messdaten |
| 68 | Rohe Daten vom Frontend |
| 70 | Berücksichtigung externer Störquellen |
| 72 | Korrektur von Frontend-Exemplarstreuungen; Eingangssignal: Systemparameter |
| 74 | Korrektur von Temperatur- und Alterungseinflüssen; Eingangsparameter: Referenzmessung im Werk, neue Referenzmessung |
| 76 | Trennung von Signalen der Wandoberfläche und Signalen der Wandeinschlüsse, Bestimmen des Wandmaterials; Eingangsparameter: Parameter, Interpolationsvektoren; Ausgangsparameter: Wandmaterial, Benutzerführung |
| 78 | Berücksichtigung der Geometriefaktoren des Sensors |
| 80 | Entscheidung Objekt ja/nein, Bestimmung der Objektgröße und Objekttiefe; Eingangsparameter: Schwellen, Wandmaterial |
| 82 | Anzeige des Ergebnisses, Eingangsparameter: Begrenzung der Anzeigetiefe |

**Patentansprüche**

1. Verfahren zur Ortung von in einem Medium (10) eingeschlossenen Objekten (12), bei welchem mittels zumindest einer kapazitiven Sensorvorrichtung (14) ein Detektionssignal erzeugt wird, welches in das zu untersuchende Medium (10) eingreift, so dass durch eine Auswertung dieses Detektionssignals, insbesondere durch eine Impedanzmessung, eine Information über ein in dem Medium (10) eingeschlossenes Objekt (12) gewonnen wird, **dadurch gekennzeichnet, dass** zur Erlangung einer Tiefeninformation (d) über das in dem Medium (10) eingeschlossene Objekt (12) ein Algorithmus zur Auswertung des Detektionssignals verwendet wird, der eine Kompensation von Drifteffekten der das Detektionssignal erzeugenden kapazitiven Sensorvorrichtung (14) errechnet, wobei zur Kompensation der Drifteffekte ein Vergleich (74) durchgeführt wird, zwischen mindestens einer Referenzmessung (92) eines Referenzsignals einer definierten Kalibrierungsgröße und einem vor der Messung zur Ortung eines eingeschlossenen Objektes (12) aufzunehmenden Kalibriersignal (64) der gleichen Kalibrierungsgröße.

2. Verfahren nach Anspruch 1, **dadurch gekennzeichnet, dass** mindestens ein Referenzsignal durch eine Referenzmessung (92) einer definierten Impedanz (54) gewonnen wird.

3. Verfahren nach Anspruch 2, **dadurch gekennzeichnet, dass** zumindest ein Referenzsignal durch einen Kurzschluss des Detektionssignals, insbesondere in der kapazitiven Sensorvorrichtung (14), gewonnen wird.

4. Verfahren nach einem der Ansprüche 1 oder 2, **dadurch gekennzeichnet, dass** mindestens ein Referenzsignal durch eine Luftmessung gewonnen wird.

5. Verfahren nach einem der vorhergehenden Ansprüche, **dadurch gekennzeichnet, dass** mindestens ein Kalibriersignal durch eine Messung (64) einer definierten Impedanz (54) gewonnen wird.

6. Verfahren nach Anspruch 5, **dadurch gekennzeichnet, dass** mindestens ein Kalibriersignal durch einen Kurzschluss eines Detektionssignals, insbesondere in der kapazitiven Sensorvorrichtung (14), gewonnen wird.

7. Verfahren nach einem der Ansprüche 1 bis 5, **dadurch gekennzeichnet, dass** zumindest ein Kalibriersignal durch eine Luftmessung gewonnen wird.

8. Verfahren nach einem der Ansprüche 1, 2 oder 5, **dadurch gekennzeichnet, dass** mindestens ein Referenzsignal und/oder mindestens ein Kalibriersignal durch Messung eines definierten Kalibriersteines gewonnen wird.

9. Verfahren nach einem der vorhergehenden Ansprüche 1 bis 8, **dadurch gekennzeichnet, dass** aus einem Vergleich (74) zwischen dem mindestens einen abgespeicherten Referenzsignal der Kalibrierungsgröße und dem vor der Messung zur Ortung des eingeschlossenen Objektes gemessenen Kalibriersignal eine Korrekturfunktion ($\gamma^0(\omega)$, $\gamma^1(\omega)$) für ein aus dem Detektionssignal gewonnenes Messsignal (M) ermittelt wird.

10. Verfahren nach Anspruch 9, **dadurch gekennzeichnet, dass** als Korrekturfunktion für ein aus dem Detektionssignal gewonnenes Messsignal (M) eine lineare Funktion ($M^{ist}(\omega)) = \gamma^0(\omega) * M^{cal}(\omega) + \gamma^1(\omega)$ ) genutzt wird.

11. Verfahren nach einem der vorhergehenden Ansprüche, **dadurch gekennzeichnet, dass** eine mit einem Verschiebestrom ($I(\omega)$) der kapazitiven Sensorvorrichtung (14) korrelierte Messgröße (M) gemessen und bestimmt wird, um eine Tiefeninformation (d) aus dem Detektionssignal zu gewinnen.

12. Verfahren nach Anspruch 11, **dadurch gekennzeichnet, dass** eine in linearer Weise ($M = M(\omega) = \alpha(\omega) + \beta(\omega) * I(\omega)$) vom Verschiebestrom ($I(\omega)$) der kapazitiven Sensorvorrichtung (14) abhängige Messgröße (M) von einem Algorithmus ausgewertet wird.

13. Verfahren nach Anspruch 12, **dadurch gekennzeichnet, dass** die Messgröße (M) eine elektrische Spannung ist.

14. Verfahren nach Anspruch 12 oder 13, **dadurch gekennzeichnet, dass** die Messgröße (M) in Betrag und Phase gemessen und vom Algorithmus ausgewertet wird.

15. Verfahren nach einem der vorhergehenden Ansprüche, **dadurch gekennzeichnet, dass** die Messgröße (M) als Funktion einer lateralen Verschiebung (50,52) der das Detektionssignal generierenden kapazitiven Sensorvorrichtung (14) gemessen und ausgewertet wird.

16. Verfahren nach einem der vorhergehenden Ansprüche, **dadurch gekennzeichnet, dass** die Messgröße ($M = M(\omega)$) als Funktion von mehr als einer Messfrequenz gemessen und ausgewertet wird.

17. Ortungsgerät (18), insbesondere ein handgehaltenes Ortungsgerät, zur Ortung von in einem Medium (10) eingeschlossenen Objekten (12), mit einer kapazitiven Sensorvorrichtung (14), mit Mitteln (32,36) zur Erzeugung eines Detektionssignals für diese Sensorvorrichtung, ferner mit einer Steuer- und Auswerteeinheit (32,44,46) zur Ermittlung von Messwerten aus dem Detektionssignal, sowie mit einer Ausgabevorrichtung (48) für die ermittelten Messwerte **gekennzeichnet durch** Mittel zur Durchführung eines Verfahrens nach einem der Ansprüche 1 bis 16, welche so eingerichtet sind, dass zur Erlangung einer Tiefeninformation (d) über das in dem Medium (10) eingeschlossene Objekt (12) ein Algorithmus zur Auswertung des Detektionssignals verwendet wird, der eine Kompensation von Drifteffekten der das Detektionssignal erzeugenden kapazitiven Sensorvorrichtung (14) errechnet, wobei zur Kompensation der Drifteffekte ein Vergleich durchgeführt wird, zwischen mindestens einer Referenzmessung (92) eines Referenzsignals einer definierten Kalibrierungsgröße und einem vor der Messung zur Ortung eines eingeschlossenen Objektes (12) aufzunehmenden Kalibriersignal (64) der gleichen Kalibrierungsgröße.

18. Ortungsgerät nach Anspruch 17, **dadurch gekennzeichnet, dass** das Ortungsgerät (18) zumindest eine interne Kalibrierungsvorrichtung aufweist.

19. Ortungsgerät nach Anspruch 18, **dadurch gekennzeichnet, dass** die mindestens eine Kalibrierungsvorrichtung einen Kurzschlussschalter aufweist.

20. Ortungsgerät nach Anspruch 18 oder 19, **dadurch gekennzeichnet, dass** das Ortungsgerät (18) Schaltmittel (56) zur zeitweisen Aktivierung der Kalibrierungsvorrichtung aufweist.

21. Ortungsgerät nach einem der Ansprüche 17 bis 20, **dadurch gekennzeichnet, dass** das Ortungsgerät (18) Mittel zur Speicherung von Materialdaten, insbesondere von ermittelten Referenzwerten einer Kalibrierungsgröße, aufweist.

22. Ortungsgerät nach einem der Ansprüche 17 bis 21, **dadurch gekennzeichnet, dass** das Ortungsgerät (18) Mittel aufweist, die es ermöglichen Referenzwerte der Kalibierungsgrößen in das Ortungsgerät beispielsweise bereits bei der Fertigung des H Gerätes, einzuspielen und abzuspeichern (100).

23. Ortungsgerät nach einem der Ansprüche 17 bis 22, **dadurch gekennzeichnet, dass** das Ortungsgerät (18) Mittel aufweist, die es ermöglichen, errechnete Messergebnisse, insbesondere die Lage und Tiefe eines Objektes (12) in einem Medium (10), ortsaufgelöst auf einer Anzeigevorrichtung (48) des Ortungsgerätes (18) darzustellen.

## Claims

1. Method for locating objects (12) which are enclosed in a medium (10), in which at least one capacitive sensor apparatus (14) is used to generate a detection signal which enters the medium (10) to be analysed, with the result that information relating to an object (12) which is enclosed in the medium (10) is obtained by evaluating this detection signal, in particular by means of an impedance measurement, **characterized in that** an algorithm which is intended to evaluate the detection signal and calculates compensation for drift effects of the capacitive sensor apparatus (14), which generates the detection signal, is used to acquire depth information (d) relating to the object (12) which is enclosed in the medium (10), at least one reference measurement (92) of a reference signal of a defined calibration variable and a calibration signal (64) of the same calibration variable, which is to be recorded before the measurement for locating an enclosed object (12), are compared (74) in order to compensate for the drift effects.

2. Method according to Claim 1, **characterized in that** at least one reference signal is obtained by means of a reference measurement (92) of a defined impedance (54).

3. Method according to Claim 2, **characterized in that** at least one reference signal is obtained by short-circuiting the detection signal, in particular in the capacitive sensor apparatus (14).

4. Method according to either of Claims 1 and 2, **characterized in that** at least one reference signal is obtained by means of an air measurement.

5. Method according to one of the preceding claims, **characterized in that** at least one calibration signal is obtained by measuring (64) a defined impedance (54).

6. Method according to Claim 5, **characterized in that** at least one calibration signal is obtained by short-circuiting a detection signal, in particular in the capacitive sensor apparatus (14).

7. Method according to one of Claims 1 to 5, **characterized in that** at least one calibration signal is obtained by means of an air measurement.

8. Method according to one of Claims 1, 2 or 5, **characterized in that** at least one reference signal and/or at least one calibration signal is/are obtained by measuring a defined calibration die.

9. Method according to one of the preceding Claims 1 to 8, **characterized in that** a correction function ($y^0(\omega)$, $\gamma^1(\omega)$) for a measurement signal (M) obtained from the detection signal is determined by comparing (74) the at least one stored reference signal of the calibration variable and the calibration signal measured before the measurement for locating the enclosed object.

10. Method according to Claim 9, **characterized in that** a linear function ($M^{act}(\omega)) = \gamma^0(\omega))*M^{cal}(\omega)) + \gamma^1(\omega))$) is used as the correction function for a measurement signal (M) obtained from the detection signal.

11. Method according to one of the preceding claims, **characterized in that** a measurement variable (M) which is correlated with a displacement current ($I(\omega)$) of the capacitive sensor apparatus (14) is measured and determined in order to obtain depth information (d) from the detection signal.

12. Method according to Claim 11, **characterized in that** a measurement variable (M) which depends on the displacement current ($I(\omega)$) of the capacitive sensor apparatus (14) in a linear manner ($M = M(\omega) = \alpha(\omega) + \beta(\omega) * I(\omega)$) is evaluated by an algorithm.

13. Method according to Claim 12, **characterized in that** the measurement variable (M) is an electrical voltage.

14. Method according to Claim 12 or 13, **characterized in that** the magnitude and phase of the measurement variable (M) are measured and evaluated by the algorithm.

15. Method according to one of the preceding claims, **characterized in that** the measurement variable (M) is measured and evaluated as a function of a lateral displacement (50, 52) of the capacitive sensor apparatus (14) which generates the detection signal.

16. Method according to one of the preceding claims, **characterized in that** the measurement variable ($M = M(\omega)$) is measured and evaluated as a function of more than one measurement frequency.

17. Locating device (18), in particular a handheld locating device, for locating objects (12) which are enclosed in a medium (10), said device having a capacitive sensor apparatus (14), having means (32, 36) for generating a detection signal for this sensor apparatus, also having a control and evaluation unit (32, 44, 46) for determining measured values from the detection signal as well as having an output apparatus (48) for the measured values which have been determined, **characterized by** means for carrying out a method according to one of Claims 1 to 16, which means are set up in such a manner that an algorithm which is intended to evaluate the detection signal and calculates compensation for drift effects of the capacitive sensor apparatus (14), which generates the detection signal, is used to obtain depth information (d) relating to the object (12) which is enclosed in the medium (10), at least one reference measurement (92) of a reference signal of a defined calibration variable and a calibration signal (64) of the same calibration variable, which is to be recorded before the measurement for locating an enclosed object (12), being compared in order to compensate for the drift effects.

18. Locating device according to Claim 17, **characterized in that** the locating device (18) has at least one internal calibration apparatus.

19. Locating device according to Claim 18, **characterized in that** the at least one calibration apparatus has a short-circuit switch.

20. Locating device according to Claim 18 or 19, **characterized in that** the locating device (18) has switching means (56) for occasionally activating the calibration apparatus.

21. Locating device according to one of Claims 17 to 20, **characterized in that** the locating device (18) has means for storing material data, in particular reference values of a calibration variable which have been determined.

22. Locating device according to one of Claims 17 to 21, **characterized in that** the locating device (18) has means which make it possible for reference values of the calibration variables to be recorded and stored (100) in the locating device as early as during manufacture of the device, for example.

23. Locating device according to one of Claims 17 to 22, **characterized in that** the locating device (18) has means which make it possible for calculated measurement results, in particular the position and depth of an object (12) in a medium (10), to be displayed on a display apparatus (48) of the locating device (18) in a spatially resolved manner.

**Revendications**

**1.** Procédé de localisation d'objets (12) renfermés dans un milieu (10), selon lequel, à l'aide d'au moins un dispositif de capteur capacitif (14), on génère un signal de détection pénétrant dans le milieu à examiner (10) pour que par l'exploitation de ce signal de détection, notamment par une mesure d'impédance on puisse obtenir une information concernant un objet (12) renfermé dans le milieu (10),
**caractérisé en ce que**
pour obtenir une information de profondeur (d) concernant l'objet (12) enfermé dans le milieu (10), on utilise un algorithme pour exploiter le signal de détection, cet algorithme calculant une compensation des effets de dérive du dispositif de capteur capacitif (14) générant le signal de détection, et pour compenser l'effet de dérive on effectue une comparaison (74) entre au moins une mesure de référence (92) d'un signal de référence d'une grandeur de calibrage définie et un signal de calibrage (74) de la même dimension de calibrage avant la mesure de localisation d'un objet renfermé (12).

**2.** Procédé selon la revendication 1,
**caractérisé en ce qu'**
on recueille au moins un signal de référence par une mesure de référence (92) d'une impédance définie (54).

**3.** Procédé selon la revendication 2,
**caractérisé en ce qu'**
on recueille au moins un signal de référence par un court-circuit du signal de détection, notamment du dispositif de capteur capacitif (14).

**4.** Procédé selon l'une des revendications 1 ou 2,
**caractérisé en ce qu'**
on recueille au moins un signal de référence par une mesure dans l'air.

**5.** Procédé selon l'une des revendications précédentes,
**caractérisé en ce qu'**
on recueille au moins un signal de calibrage par une mesure (64) d'une impédance définie (54).

**6.** Procédé selon la revendication 5,
**caractérisé en ce qu'**
on recueille au moins un signal de calibrage par un court-circuit d'un signal de détection, notamment dans les dispositifs de capteurs capacitifs (14).

**7.** Procédé selon l'une des revendications 1 à 5,
**caractérisé en ce qu'**
on recueille au moins un signal de calibrage par une mesure dans l'air.

**8.** Procédé selon l'une des revendications 1, 2 ou 5,
**caractérisé en ce qu'**
on recueille au moins un signal de référence et/ou au moins un signal de calibrage par une mesure d'un jalon de calibrage défini.

**9.** Procédé selon l'une des revendications précédentes 1 à 8,
**caractérisé en ce qu'**
à partir d'une comparaison (74) entre au moins un signal de référence mesuré de la grandeur de calibrage et le signal de calibrage mesuré avant la mesure de localisation de l'objet enfermé, on détermine une fonction de correction $(\gamma^0(\omega), \gamma^1(\omega))$ pour un signal de mesure (M) obtenu à partir du signal de détection.

**10.** Procédé selon la revendication 9,
**caractérisé en ce que**
comme fonction de correction pour un signal de mesure (M) obtenu à partir du signal de détection, on utilise une fonction linéaire

$$(M^{ist}(\omega) = \gamma^0(\omega) \ast M^{cal}(\omega) + \gamma^1(\omega)).$$

**11.** Procédé selon l'une des revendications précédentes,
**caractérisé en ce qu'**
on mesure une grandeur de mesure (M) en corrélation avec un courant de décalage (1(ω)) du dispositif de capteur capacitif (14) et on le détermine pour obtenir une information de profondeur (d) à partir du signal de détection.

**12.** Procédé selon la revendication 11,
**caractérisé en ce qu'**
on exploite avec un algorithme une grandeur de mesure (M) dépendant selon une fonction linéaire (M = M(ω) = α (ω) + β (ω) * 1 (ω)) du courant de décalage (1(ω)) du dispositif de capteur capacitif (14).

**13.** Procédé selon la revendication 12,
**caractérisé en ce que**
la grandeur de mesure (M) est une tension électrique.

**14.** Procédé selon les revendications 12 ou 13,
**caractérisé en ce que**
la grandeur de mesure (M) est mesurée en amplitude et en phase et exploitée par l'algorithme.

**15.** Procédé selon l'une des revendications précédentes,
**caractérisé en ce que**
la grandeur de mesure (M) est une fonction d'un décalage latéral (50, 52) qui mesure et exploite le dispositif de capteur capacitif (14) générant le signal de détection.

**16.** Procédé selon l'une des revendications précédentes,
**caractérisé en ce que**
la grandeur (M = M(ω)) est mesurée et exploitée comme fonction de plus d'une fréquence de mesure.

**17.** Appareil de localisation (18), notamment appareil de localisation tenu à la main pour localiser des objets (12) renfermés dans un milieu (10) comportant un dispositif de capteur capacitif (14), des moyens (32, 36) pour générer un signal de détection pour ce dispositif de capteur ainsi qu'une unité de commande et d'exploitation (32, 44, 46) pour déterminer les valeurs de mesure à partir du signal de détection ainsi qu'un dispositif d'émission (48) pour les valeurs de mesure obtenues,
**caractérisé par**
des moyens pour mettre en oeuvre un procédé selon l'une des revendications 1 à 16, ces moyens étant conçus pour obtenir une information de profondeur (D) concernant l'objet (12) renfermé dans le milieu (10), en utilisant un algorithme pour exploiter le signal de détection qui calcule une compensation de l'effet de dérive du dispositif de capteur capacitif générant le signal de détection,
et pour compenser l'effet de dérive on effectue une comparaison entre au moins une mesure de référence (92) d'un signal de référence d'une grandeur de calibrage définie et un objet (12) de même grandeur de calibrage, enfermé avant la mesure de localisation de l'objet enfermé (12) pour fournir un signal de calibrage (64).

**18.** Appareil de localisation selon la revendication 17,
**caractérisé en ce qu'**
il (18) comporte au moins un dispositif de calibrage interne.

**19.** Appareil de localisation selon la revendication 18,
**caractérisé en ce qu'**
il comporte au moins un dispositif de calibrage avec un commutateur de court-circuit.

**20.** Appareil de localisation selon les revendications 18 ou 19,
**caractérisé en ce qu'**
il (18) comporte des moyens de commutation (56) pour activer de temps en temps le dispositif de calibrage.

**21.** Appareil de localisation selon l'une des revendications 17 à 20,

**caractérisé en ce que**
l'appareil de mesure (18) comporte des moyens pour enregistrer en mémoire des données de matières, notamment des valeurs de références obtenues d'une grandeur de calibrage.

22. Appareil de localisation selon l'une des revendications 17 à 21,
**caractérisé en ce qu'**
il (18) comporte des moyens permettant d'enregistrer et de lire (100) des valeurs de références des grandeurs de calibrage dans l'appareil de localisation, par exemple déjà dès la fabrication de l'appareil.

23. Appareil de localisation selon l'une des revendications 17 à 22,
**caractérisé en ce qu'**
il (18) comporte des moyens permettant de représenter des résultats de mesures calculées, notamment la position et la profondeur d'objets (12) dans un milieu (10), avec la résolution de l'emplacement sur un dispositif d'affichage (48) de l'appareil de localisation (18).

## Fig.1

# Fig.2

# Fig.3

$$M^{-10°C}(\omega) = \gamma^0(\omega) \cdot [M^{20°C}(\omega)] + \gamma^1(\omega)$$

Fig.4

90

92

94

96

98

100

Fig.5

60

62

64

66

68

70

72

74

76

78

80

82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6249113 B1
- US 6249113 B
- WO 9404932 A
- US 6198271 B1